# EUROPEAN PATENT SPECIFICATION

(11) **EP 3 328 634 B1**
(45) Date of publication and mention of the grant of the patent: **03.04.2019**
(21) Application number: 16757753.5
(22) Date of filing: 29.07.2016
(51) Int. Cl.: B32B 5/02, A47G 35/00, B41M 5/00

(54) **EMBOSSED FABRIC ASSEMBLY**
GEPRÄGTE STOFFANORDNUNG
ENSEMBLE TISSU GAUFRÉ

(30) Priority: 31.07.2015 US 201562199794 P
(43) Date of publication of application: 06.06.2018
(73) Proprietor: Higher Dimension Materials, Inc., Oakdale, MN 55128 (US)
(72) Inventor: OLMSTED, Richard D., Vadnais Heights, Minnesota 55127 (US); COOPER, Peter Charles, Helmshore Lancashire BB4 6JU (GB)
(74) Representative: HGF Limited
(86) International application number: PCT/US2016/044848
(87) International publication number: WO 2017/023799

(56) References cited:
- WO-A1-03/057462
- WO-A1-2011/103466

## Description

### TECHNICAL FIELD

In some aspects, the disclosure relates to fabric assemblies that may be used for one or more desired applications.

WO 2011/103466 A1 describes, in one example, a fabric assembly comprising a flexible fabric substrate including a top surface and a plurality of polymeric guard plates on the surface of the substrate. The plurality of polymeric guard plates may comprise a first array of guard plates on a first portion of the top surface arranged in a first pattern, and a second array of guard plates on a second portion of the top surface separate from the first portion arranged in a second pattern, where the first pattern is different from the second pattern.

WO 03/057462 A1 describes a fabric includes a fabric substrate and a plurality of guard plate assemblies affixed to the fabric substrate in a spaced relationship to each other. Each guard plate assembly includes a first layer of material affixed to the fabric substrate and a second layer of material joined to the first layer of material on a surface opposite the fabric substrate. The second layer of material has characteristics different than the first layer of material and are chosen commonly to meet the demands of the application to which the fabric is designed.

### SUMMARY

In some examples, the disclosure relates to an assembly comprising an embossing support layer; a fabric substrate attached to a surface of the embossing support layer; a plurality of plates separated by gaps on a surface of the fabric substrate and attached to the surface of the fabric substrate, wherein a thickness of the embossing support layer varies to define a plurality of raised portions separated by lower portions having a thickness less than a thickness of the plurality of the raised portion, wherein the raised portions and lowered portions define a pattern on a surface of the assembly including the fabric substrate and plurality of plates, and wherein each raised area of the plurality of raised areas includes more than one plate of the plurality of plates.

In another example, the disclosure relates to a method comprising attaching a fabric substrate to a surface of an embossing support layer, wherein the substrate includes a plurality of plates separated by gaps on a surface of the fabric substrate and attached to the surface of the fabric substrate, wherein a thickness of the embossing support layer varies to define a plurality of raised portions separated by lower portions having a thickness less than a thickness of the plurality of the raised portion, wherein the raised portions and lowered portions define a pattern on a surface of the assembly including the fabric substrate and plurality of plates, and wherein each raised area of the plurality of raised areas includes more than one plate of the plurality of plates.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 illustrates a cross-sectional view of the construction of a fabric assembly including plates separated by gaps on the surface of a fabric substrate.
FIG. 2 illustrates how the components of plates, gaps, and flexible substrate are combined into a fabric assembly.
FIG. 3 is a plan view of an example fabric assembly showing example plate shapes, plate patterns, and variations in gap widths.
FIG. 4 illustrates a cross-sectional view of embossed fabric assembly.
FIG. 5 is a perspective view of embossed fabric assembly with a uniform diamond shape of raised portions and resulting embossing lines. The plates are circular and arranged in a hexagonal pattern.
FIG. 6 illustrates an example of embossed fabric assembly with a uniform rectangular shape of raised portions and resulting embossing lines. The plates are differently sized circles in a jacks pattern.
FIG. 7 is a perspective view of embossed fabric assembly with a uniform hexagon shape of raised portions and resulting embossing lines. The plates are circular and arranged in a hexagonal pattern.
FIG. 8 is a perspective view of embossed fabric assembly with a pseudorandom shape of raised portions and resulting embossing lines. The plates are circular and arranged in a hexagonal pattern.
FIGS. 9A-9G are conceptual diagrams illustrating various examples of guard plate shapes.
FIGS. 10A and 10B are conceptual diagrams illustrating two example gap width-to-guard plate size aspect ratios.
FIGS. 11A-11D are conceptual diagrams illustrating various example guard plate shapes and example guard plate geometries.
FIGS. 12A-12D are conceptual diagrams illustrating various example cross sections for example guard plates.
FIGS. 13A and 13B are conceptual diagrams illustrating example guard plates arranged on a fabric substrate from perspective view showing the 3-dimensional nature of the example guard plates.
FIG. 14 is a flow diagram illustrating an example technique for making an embossed fabric assembly in accordance with the disclosure.
FIG. 15 illustrates an example of embossed fabric assembly raised portions and embossing lines and also bent for an elbow pad application.
FIGS. 16 and 17 illustrate the stain resistance property of some embossed fabric assemblies of this disclosure.

### DETAILED DESCRIPTION

In some examples, the disclosure is related to embossed fabric assemblies and methods of making the same. An embossed fabric assembly may include a fabric substrate including a surface that is attached to the surface of an embossing support layer. The assembly may also include a plurality of plates (e.g., cured resin plates) attached to the opposite surface of the fabric substrate and separated by gaps on the surface of the fabric substrate.

The thickness of the embossing support layer may vary such that the embossing support layer includes a plurality of raised portions separated by lower portions of the embossing support layer having a thickness less than the raised portions. In some examples, the embossing support layer may be referred to as an embossed layer. When the fabric substrate including the plurality of plates is attached to the surface of the embossing support layer, the combination may form an embossed fabric assembly. The size, shape, and/or arrangement of the plates on the fabric substrate in combination with the size, shape, and/or arrangement of the raised and lower portions may be such that each of the raised portions and lower portions may include more than plate in the portion of the fabric substrate covering the respective raised/lower portion.

Although portions of the embossing support layer may be referred to as being "raised portions" or "lower portions" or "lowered portions," such references do not necessarily require that one or more steps have be carried to raise (e.g., increase the thickness) of portions of the embossing support layer from some original or prior thickness or lower (e.g., decrease the thickness) of portions of the embossing support layer from some original or prior thickness. Rather, such description may refer to the state of the embossing support layer have portions in which the thickness is greater than the thickness of other portions of the embossing support layer. The thicker portions of the embossing support layer may be separated by areas of the embossing support layer that are not as thick. In this manner, in some examples, the embossing support layer may be an embossed layer.

In some examples, the disclosure is directed toward a unique fabric assembly that is created when an embossing process is applied onto a fabric assembly including a fabric substrate (e.g., a woven, non-woven, or knit fabric substrate) with a plurality of plates attached to and separated by gaps on the surface of the substrate. As will be described below, in some examples, such a fabric assembly may take the form of SUPERFABRIC® (commercially available from Higher Dimension Materials, Oakdale, Minnesota, USA). The fabric assembly itself may be a breathable, stain resistant and flexible fabric having an array of closely spaced, non-overlapping and well designed and engineered guard plates with high degree of resistance to abrasion, wear, cut, tear, and/or puncture. The embossing, a simple and inexpensive process, when applied onto the fabric assembly (e.g., by attaching the fabric assembly to an embossing support layer defining raised and lowered portions), creates a novel fabric due to the synergy between the fabric assembly attributes and the variable and selective embossing attributes which make the embossed fabric assembly mechanically strong with desirable aesthetics and unsurpassed functionality, e.g., that can be tailored to fit a wide range of customer and market demands. These characteristics of the new created fabric along with its continuous air layer make it useful in numerous applications such as furniture, car seats, luggage, garments, apron, elbow pads, kneepads, wheelchair cushions hospital bed cushions, and many other applications.

There are two example types of finishes that may be applied onto a fabric, e.g., after manufacturing and before shipment to the customer. One is chemical finishes or coatings that are applied to the fabric such as water repellents, stain resistance, flame retardants, UV protection, antimicrobial and anti-static. The second type of finish is mechanical and may include embossing (e.g., engraved rollers press a relief pattern into the fabric).

An embossed article may refer to any article having at least one surface having a carved, molded, stamped, printed or otherwise constructed design such that the design stands out in relief. In this context, relief can assume any one of several common definitions such as a mode of sculpture in which forms and figures are distinguished from a surrounding plane surface, or a sculpture or a sculptural form executed in this mode. Relief is also commonly used to describe anything projecting detail, ornament, or figures, or sharpness of outline due to contrast. Relief can also mean the state of being distinguished by contrast. In some examples, embossing refers to the creation of an impression of some kind of design, decoration, lettering or pattern on another surface like paper, cloth, metal and leather, to make a relief. In regular printing or an engraving, plates are pressed against the surface to leave an imprint. The terms embossed or relief are not limited to these few examples.

Embossing may provide an elegant and often inexpensive process that changes the nature of the material that has been embossed. From an appearance standpoint, embossing may elevate the standard and quality of the product. A notary's embossed seal can give much weight to a regular piece of paper. Similarly, an embossed wedding card immediately changes the entire meaning conveyed by the invitation. The recipient is informed not only about the wedding but also that it is going to be a high profile wedding with an elegant ceremony and delicious food. Embossing thus makes things positively breathtaking and more beautiful than they originally are. The simplest of objects can become a piece of art worthy of the highest praise by using a technique as easy and inexpensive as embossing. Thus, embossing is a technique that adds elegance and sensuality to any surface.

Embossing technologies may be applied to different substrates such as fabric, paper, metal sheets, etc. Examples may include those described in US patent 6,554,963, assigned for Albany International Corp., Albany, NY, which describes a fabric embossing devise which operate continuously, and include two roll calendar having a preselected embossing pattern. Other example embossing methods are mentioned in US patent 6,376,041, assigned for Microfiber, Inc., Pawtucket, RI, and US patents 6,376,041 and 8,425, 729, both assigned to Karl Freudenberg KG, Weinheim, Germany.

Embossed fabrics currently available in the market are made from common and ordinary fabrics in combination with various embossing technologies. The embossing process is made for aesthetic reasons, the creation of a cushion to reduce impact, or to improve the comfort or tactile feeling of a fabric object.

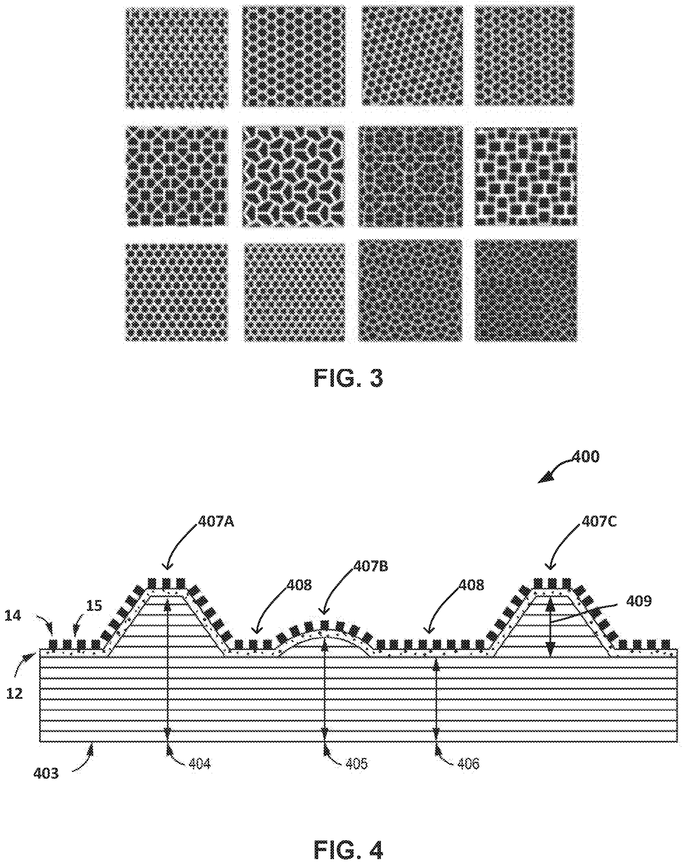

FIG. 4 is a schematic diagram illustrating a cross-section of an embossed fabric assembly 400. Embossed fabric assembly 400 includes fabric substrate 12 affixed to the top surface of embossing support layer 403. Fabric substrate 12 includes a plurality of guard plates 14 separated by gaps 15 on the surface opposite embossing support layer 403. The thickness of embossing support layer 403 varies and defines a first thickness (404), a second thickness (405), and third thickness (406). The varying thicknesses serve to define first raised portion 407A, second raised portion 407B, and third raised portion 407C, which are separated by lower portions 408.

As shown, raised portions 407A, 407B, 407C and lowered portions 408 define a pattern on a surface of the assembly, and are sized, shaped, and/or oriented such that each discrete raised portion 407A, 407B, 407C includes more than one guard plate 14 of the plurality of guard plates. Similarly, lowered portion 408 also includes more than one guard plate 14 of the plurality of guard plates. Lowered portions 408 may be described as defining embossing lines, the reasons for this definition being clear in the examples and figures described further below.

The thickness of the each raised portion of the plurality of raised portions may be different from each other. For example, as shown, thickness 404 of first raised portion 407A is different than that (greater) of thickness 405 of second raised portion 407B. Both first raised portion 407A and second raised portion 407B are greater than thickness 406 of lower portion 408 which separates raised portion 407A and 407B. In other examples, all or substantially all of the raised portions may have a substantially uniform thickness, e.g., where raised portions 407A-407C have substantially the same thickness.

Raised portions 407A, 407B, and 407C may exhibit any suitable thickness. In some examples, for example furniture upholstery, the thickness may range from about 3 millimeters (mm) to about 5 mm. In other examples, such as noise abatement panels, the thickness of raised portions may range from about 3 mm to about 500 mm to provide efficient interference of sounds over a broad range of frequencies. In cushions that are intended to relieve pressure sores, the thickness may range from about 6 mm to about 150 mm. The preferred range of thicknesses depends on the application for which the inventive fabric is intended.

FIG. 4 shows an example in which thickness 406 of lower portions 408 is substantially uniform. However, in other example, the thickness of lower portions 408 may vary, e.g., there may be areas in which lower portions 408 separating some raised portions may be different than lower portions 408 separating other raised portions. Lower portions 408 may exhibit any suitable thickness. In some examples, the thickness may range from about 0.025 mm to about 500 mm, such as, e.g., about 0.025 mm to about 5 mm, e.g., in applications where the embossing support layer is intended to provide a relief for raised layers that will be used to transfer material to a separate substance as in a printing process or coating process wherein the separate substance is to be coated with the transferred substance in the pattern provided by the embossing support pattern relief. In another example the thickness of the lower portions 408 may range from about 1 mm to about 500 mm as may be necessary to provide the height separations from raised portions necessary to produce a quadratic residue diffuser, to enable uniform broadband scattering interference and reduce High-Q reflections of sound waves in an acoustic noise abatement application. In cushions that are intended to relieve pressure sores, the thickness may range from about 3 mm to about 140 mm. The preferred range of thicknesses depends on the application for which the inventive fabric is intended.

As mentioned above, although portions of the embossing support layer may be referred to as being "raised portions" or "lower portions" or "lowered portions," such references to does necessarily require that one or more steps have be carried to raise (e.g., increase the thickness) of portions of the embossing support layer from some original or prior thickness or lower (e.g., decrease the thickness) of portions of the embossing support layer from some original or prior thickness. Rather, such description may refer to the state of the embossing support layer have portions in which the thickness is greater than the thickness of other portions of the embossing support layer. The thicker portions of the embossing support layer may be separated by areas of the embossing support layer that are not as thick. In this manner, in some examples, the embossing support layer may be an embossed layer.

As shown in FIG. 4, each of raised portions 407A-407C are directly adjacent to portions that have less thickness (lower portion 408 in FIG. 4) than the respective raised portion. In this sense, each or raised portion 407A-407C may be described as protruding or projecting from the surface of embossing support layer 403 relative the directly adjacent lower portion 408. For example, raised portion 407C protrudes or projects relative the adjacent thickness 406 of lower portion 408 by protrusion thickness 409, which corresponds to the absolute difference in thickness 404 of third raised portion 407C and thickness 406 of the adjacent lower portion 406. The protrusion thickness 409 of third raised portion 407C relative to adjacent lower portion 408 may be any desired amount and may depend on the particular application of embossed fabric assembly 400. In some examples, embossed fabric assembly 400 may include one or more raised portions, such as raised portion 407C, that exhibits a protrusion thickness 409 relative the adjacent lower portion 408 that ranges from about 0.025 mm to about 500 mm, such as, e.g., from about 0.002 mm to about 0.020 mm, or at least about 0.001 mm, e.g., for applications where the embossing support layer is intended to provide a relief for raised layers that will be used to transfer material to a separate substance as in a printing process or coating process wherein the separate substance is to be coated with the transferred substance in the pattern provided by the embossing support pattern relief. In some example noise abatement applications the protrusion thickness may need to be sufficiently large to produce controlled interference of sound waves with one another. For such noise abatement applications protrusion thicknesses are anticipated in the range of about 3 mm to about 500 mm depending on the thickness of adjacent embossing structures. In cushions for pressure sore relief the protrusion thickness may range from about 1 mm to about 140 mm. The preferred range of protrusion depends on the application for which the inventive fabric is intended.

In the disclosure, embossing support layer 403 may include (e.g., be formed of, consist essentially of, and/or consist of) any suitable material that provides raised and lowered portions that define a structure or pattern to a fabric including plates on the surface of the fabric on a length or spatial scale larger than that characteristic of the guard plates and guard plate gaps. Open-cell foam is but one example of such a material and it may be a good candidate for applications that require a cushioning effect. But there are many other candidate materials. Feathers, or cotton or polyester batting could also be used for cushioning effects. Nor is embossing support layer 403 required to be a cushioning or even a deformable material. Suitable materials for embossing support layer 403 include, but not be limited to, foam (e.g., open-cell, closed-cell, or rigid foam) or other deformable materials like sand, gels, or fluids. The embossing support layer 403 may be a starch/water mixture that is liquid under the application of a small stress and solid when subjected to a larger stress. Embossing support layer 403 may be a rigid material like closed-cell foam, glass, wood, or solid plastics. In fact, such solid materials may be of particular interest in sound abatement applications. Nor is there a restriction on embossing support layer to be a homogeneous material. Embossed fabric assembly 400 may be used in a manner that the first thickness of the embossing support layer 403 be a rigid support for another structure placed on top of embossed fabric assembly 400 and that subsequent thicknesses be designed for other purposes. Embossing support layer 403 may also be discontinuous in it composition, e.g., including patches of material defining the raised and lowered areas said patches being isolated from one another.

In some aspects, it is envisaged that embossing support layer 403 may have, but is not required to have, its own support structure. Such a structure may be another substrate fabric, it may be another layer of fabric including guard plates, or it may be a solid rigid material. The structure may be an integral part of the embossing support layer material or be affixed to the embossing support layer in some manner. The support structure need not be a homogeneous material. All examples of support structures described in the disclosure are intended to be exemplary only and are not intended to be limiting.

As shown in FIG. 4, fabric substrate 12 is attached to embossing support layer 403 such that substrate 12 substantially follows the contours of the attached surface of embossing support layer 403. Fabric substrate 12 may be attached to the surface of embossing support layer 403 using any suitable technique.

In some examples, fabric substrate 12 layer is affixed to embossing support layer 403 and embossing support layer 403 may be affixed to its own support layer. The term affixed is defined as any means that holds the layers together, is able to maintain the raised and lowered areas with sufficient distinction to ensure the identification of the various thicknesses one from another, and ensures sufficient mechanical and dimensional integrity to the overall assembly to satisfy the requirements of its intended application. In some embodiments the fabric substrate 12 may be attached to embossing support layer 403 (e.g., a foam layer) by a continuous adhesive sheet or adhesive layer. Example adhesives may include but are not limited to nonwoven adhesive webs such as those provided by Spunfab, Ltd., 175 Muffin Lane, Cuyhoga Falls, Ohio 44223. Such webs are used to effectively bond materials as textiles, nonwovens, leather, foams, wood, films, metals, glass, carpet, and plastics. There is no requirement that the affixing method holding one layer to another be continuous. Examples of methods to attach fabric to both rigid foam and compressible foam are described below.

In some examples, the embodiment of FIG. 4 illustrates where the thickness of the embossing support layer 403 varies and includes a variety of raised and lowered portions. For an embossing support layer having "N" multiple levels of varied thicknesses, the highest raised portion of embossing support layer 403, defines a first thickness, the second highest raised portion defines a second thickness, and so on until the lowest portion defines the "Nth" thickness. The raised and lowered portions are such that a plurality of discrete raised areas are formed that are separated by one or more lowered portions of the assembly. Fabric 12 is affixed to the embossing support layer 403 such that the guard plate surface remains exposed, e.g. support layer 403 is affixed to the bottom surface of fabric 12

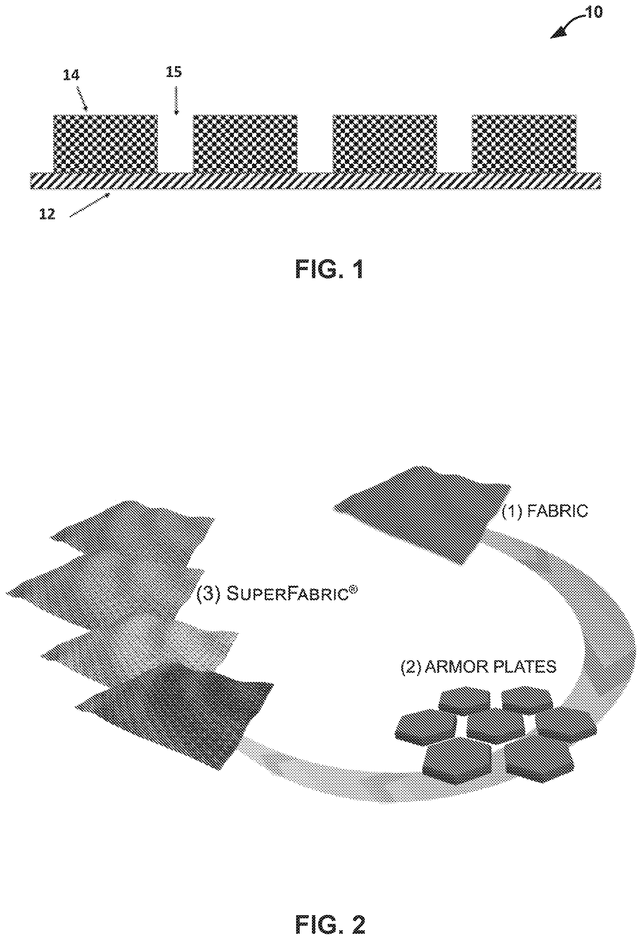

Any suitable fabric assembly including a fabric substrate and plurality of plates separated by gaps on the surface of the fabric may be embossed in the manner described herein. FIG. 1 is a schematic diagram illustrating a cross-section view of a fabric assembly 10 including fabric substrate 12 and a plurality of plates 14 separated by gaps 15 attached to the surface of fabric substrate 12. FIG. 2 is a diagram illustrating an example process for combining the three components into fabric assembly 10. The array of guard plates supported by a flexible substrate fabric but separated from one another by gaps yields a fabric construction that is locally hard but globally flexible. The local hardness gives the overall fabric assembly cut resistance, abrasion resistance, wear resistance, and durability the levels of which depend on the materials chosen for the guard plates. The guard plate materials can also be chosen to give the overall fabric construction remarkable stain resistance. The flexible substrate fabric permits the overall fabric construction the ability to conform to shaped surfaces and even drape similar to the behavior of ordinary or common flexible fabrics. FIG. 3 is a schematic diagram illustrating a plan view of various example fabric assemblies with various plate shapes and patterns and variations in gap widths that give fabric assemblies, such as, fabric assembly 10 aesthetic appeal in addition to its stain resistance, abrasion resistance, cut resistance, and durability properties.

Fabric assembly 10 may include guard plates ranging in size and shape, and in overall geometrical arrangement. Guard plate sizes may range from approximately 20 to approximately 200 mils (approximately 0.508 mm to approximately 5.08 mm) with gap areas between guard plates ranging from approximately 5 to approximately 50 mils (approximately 0.127 mm to approximately 1.27 mm), although sizes outside these ranges may be used in other examples. Guard plates may range in thickness from approximately 5 to approximately 40 mils (approximately 0.127 mm to approximately 1.02 mm), although thicknesses outside of this range may be used in other examples. In some examples, the guard plate material partially penetrates into the base fabric material and is therefore bonded or otherwise attached to the base fabric substrate. In some examples, the net result of the construction of fabric assembly 10 may be to provide a fabric with local hardness and abrasion resistance while maintaining other useful aspects of fabric such as flexibility, i.e., its ability to conform to arbitrary shapes, and vapor permeability of the base fabric material.

In addition, guard plates may be constructed of a variety of composite materials, such as cured epoxies, polyurethanes, hybrid of cured epoxy-polyurethane, etc. composited with wear and strength enhancing materials such as silicon dioxide, aluminum oxide, titanium oxide, glass beads, ceramics and other filler materials such as pigments. The wide choice of materials that can be used to construct the guard plates not only allow one to control the hardness required to afford the fabric assembly required cut resistance, wear resistance, abrasion resistance and other such mechanical properties, but also to simultaneously help control the stain resistance of the fabric assembly. For example, topically applied water with a surface energy of 73 dynes/cm will not easily wet out or penetrate a fabric with epoxy guard plates and narrow gaps, e.g. from 5 to 15 mils (0.127 mm to 0.381 mm), for epoxies having a surface energy of 45 to 50 dynes/cm and the contact angle of the water on the epoxy makes penetration into the gap regions unfavorable. Even lubricating oils with surface energies ranging from 25 to 35 dynes/cm are found to not easily absorb into a fabric assembly when the gaps widths between adjacent plates are in the 5 to 15 mil (0.127 mm to 0.381 mm) range. Moreover, independent of surface energy, guard plates made from harder materials are penetrated less by inks, dyes, dirt and other contaminants.

Ordinary and common fabrics that are typically used in making embossed fabrics do not have the unique features of embossed fabric assemblies such as embossed fabric assembly 400. For example, embossed fabrics made of cellulose are treated with resin to make them more durable, but they may lack stain resistance, durability, and breathability of fabric assembly 10 and/or embossed fabric assembly 400, thus limiting their functionality and acceptability in the marketplace. In another example, an embossed silicone continuously coated fabric may give the fabric a good aesthetic appearance and excellent slip resistance, but lack stain resistance and abrasion resistance, which limits its use in the market. An embossed vinyl fabric would have a smooth surface that appears to be easily cleaned with strong or antiseptic cleaners, but the vinyl would soon deteriorate under such cleaning action whereas the plates 14 of assembly 10 do not permit such penetration of strong chemicals into the surface.

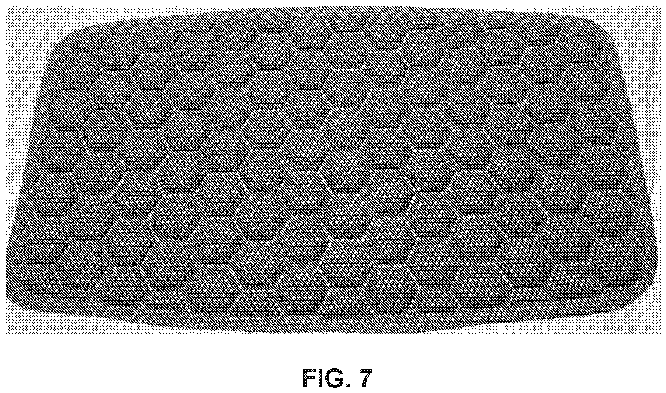

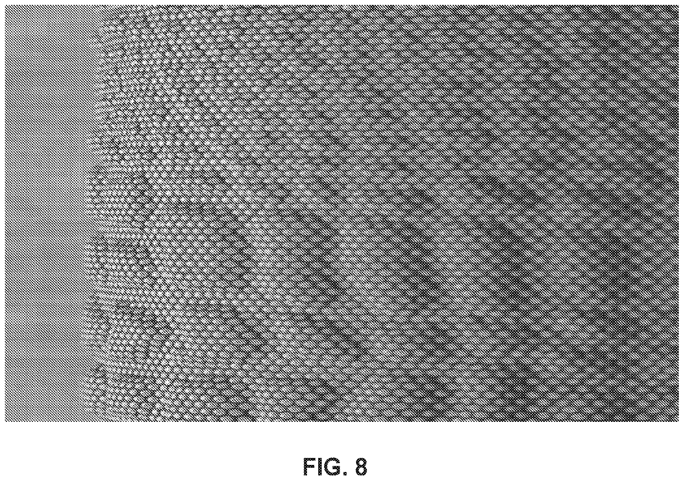

As described noted herein, some examples of this disclosure generally relate to fabric assemblies (which may be referred to as "SUPERFABRIC®") including a plurality of guard plates formed on the surface of a fabric substrate. Aspects of some examples of such fabric assemblies are described herein with regard to FIGS. 7-12, among others. SUPERFABRIC® (commercially available from Higher Dimension Materials, Oakdale, Minn.) is a family of fabric assemblies with a variety of unique features. In some examples, SUPERFABRIC® may comprise a woven or non-woven base fabric material onto which guard plates have been attached. Examples of articles including a woven or non-woven base fabric material may include one or more examples described in U.S. Pat. No. 6,962,739, entitled "Supple Penetration Resistant Fabric and Method of Making;" U.S. Pat. No. 7,018,692, entitled "Penetration Resistant Fabric with Multiple Layer Guard Plate Assemblies and Method of Making the Same;" published U.S. Patent Application No. 2004/0192133, entitled "Abrasion and Heat Resistant Fabrics;" and published U.S. Patent Application No. 2009/014253, entitled "Supple Penetration Resistant Fabric and Method of Making."

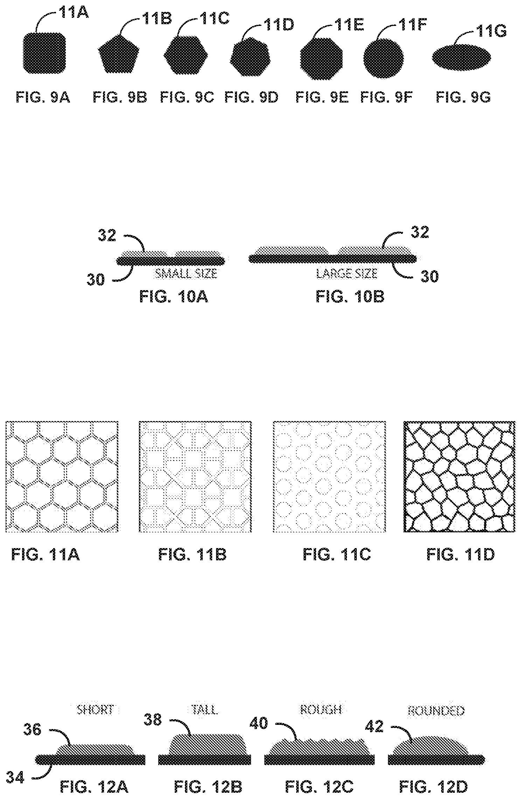

Example fabric types for flexible fabric substrate 12 (FIGS. 11A and 11B) may include, but are not limited to, woven, non-woven, or knit fabrics having the ability to permit at least partial penetration of uncured resin used to form polymeric guard plates 14 after deposition of the uncured polymer on fabric substrate 12. Fabric materials include without limitations cotton and cotton-polyester blends and other natural and man-made fabrics having similar properties. In one example, flexible fabric substrate 12 may include a tightly woven cotton-polyester blend. In such an example, this type of fabric may be used because resin compositions including heat-cured epoxy resins used to form plates 16 have been found to seep into and bond well with this substrate fabric. In some examples, substrate 12 may include a flexible and/or stretchable substrate such as a woven fabric commonly used for apparel or a non-woven fabric, or a flexible polymeric sheet or polymer film.

A guard plate, such as, e.g., guard plate 14 or guard plate 18 (FIGS. 11A and 11B), may be a 3-dimensional substantially solid plate formed of a cured polymeric composition that is bonded or otherwise attached to a surface of a fabric. In some example, a guard plate may have a substantially flat top surface (i.e., the surface of the guard plate substantially parallel to the top surface plane of substrate that the guard plate is formed on). In other example, a GP may include a dome-like top surface. A guard plate has a certain thickness protruding above the surface level of the substrate. When looked down from above the fabric substrate (referred to as the "top view"), a guard plate may have the shape of a polygon such as hexagon, pentagon, or other polygons. In some examples, a guard plate may also have a circular shape or an elliptic shape or oval shape. A guard plate may be comprised of a hard polymeric material such as a thermoset epoxy, which optionally may include one or more inorganic filler particles.

A guard plate may have the shape of any polygon in which any internal angle between two edges is less than about 180 degree (pi radian). A guard plate can also have any rounded shapes such as a circle, an ellipse, or an oval, which don't have concave boundaries. FIGS. 7A-7G illustrate various example shapes of guard plates, respectively. Other guard plates shapes are contemplated.

Size of a guard plate may be defined as the longest linear dimension of the shape of the guard plate. For example, the size of a guard plate of a circular shape is the diameter of the circle, and the size of a guard plate of hexagonal shape is the distance from a vertex of the hexagon to the farthest vertex among the remaining five vertexes. The size of a guard plate may range from about 0.2 millimeters to about 8 millimeters. However, other sizes are contemplated. In some examples, the size of a guard plate may range from about 3 millimeters to a few centimeters. In some examples, guard plate size is determined by the nature of intended applications Optimum size of guard plates may depend on the degree of bending or folding of the fabric including guard plates needed for particular applications. For example, tighter bending or folding of a fabric with guard plates may require smaller sizes of guard plates, while for applications requiring less tighter bending or folding of the fabric with guard plates may allow for larger sizes of guard plates. In some embodiments, a guard plate size may be in the range of about 1 mm to about 8 mm.

For a plurality of guard plates on the surface of a fabric substrate, the guard plates are separated from each other by gaps. The gaps may generally correspond to the portions of the fabric substrate that are not covered by guard plates, e.g., the uncovered surface of a fabric substrate between adjacent guard plates. When the guard plates are made of relatively hard abrasion protective materials that are substantially unflexible, a fabric substrate covered by guard plates with no gaps cannot be flexible. Accordingly, the gaps between guard plates may allow for flexibility and also, in many applications, for air and moisture permeability of a fabric substrate with guard plates. In some embodiments, the gap width between adjacent guard plates may be in the range of about 0.1 mm to about 2.5mm.

The gaps between guard plates may form a continuous network. In some examples, when the guard plate patterns are polygons, the gaps may maintain a substantially constant width. In this case, the gaps may be thought of as line segments with finite widths equal to the gap width. The intersection of these line segments may be referred to as a 'vertex'. The area of the guard plates near a vertex may be mechanically weaker than other parts of the guard plates since the guard plates come to a point near a vertex. The greater the number of gap 'line segments' that come together at a vertex, the weaker neighboring guard plates may become. In some examples, a fabric assembly may have a maximum of four gap 'line segments' converging at each vertex. Some vertices may have three gap 'line segments' converging. In some examples, it may be preferable to arrange guard plates in a pattern or patterns which minimizes the number of converging gap 'line segments' used. The hexagon shaped guard plates shown in FIG. 9A have only three gap 'line segments' at each vertex. The hexagon pattern has the desirable property of having no straight line gap alignments making the pattern provide for resistance to cutting and slicing with blades. In some instances, it may be desirable to have a guard plate geometry pattern with more flexibility than the hexagon pattern while keeping the overall abrasion and cut resistance of a large sized hexagon pattern.

A guard plate pattern may not be a substantially 2-dimensional pattern created on a substrate surface, which may be the case for typical screen-printed images or patterns on a T-shirt, for example. Rather, a guard plate pattern may be 3-dimensional in the sense that each guard plates has a thickness and protrudes away from (or out of) the surface of a fabric substrate. Such a feature is illustrated in FIGS. 11A and 11B, for example. The thickness of a guard plate 14 may be defined as the averaged thickness of the part of a guard plate which protrudes above the substrate surface. In some examples, a guard plate may have a thickness that is more than 5 percent but less than 50 percent of the size of the guard plate. In some examples, a guard plate has a thickness of at least 4 mils, such as, e.g., at least 8 mils or at least 12 mils. In some embodiments the thickness of a guard plates may be in a range from about 0.1 mm to about 1.0 mm.

An aspect ratio for a guard plate may be defined as a dimensionless number obtained by dividing the size of the guard plate by the thickness of the guard plate. For example, an aspect ratio of five means that the size of a guard plate is 5 times of the thickness of the guard plate. In some examples, aspect ratio of guard plates of this disclosure may be in the range of about 2 to about 20. FIGS. 10A and 10B are conceptual diagrams illustrating cross-sectional views of guard plates 32 on fabric substrate 30. As shown, guard plates 30 in FIG. 10A have a difference size and thicknesses than the guard plates 30 in FIG. 10B, and, hence, different aspect ratios. In some examples, if the aspect ratio of a guard plate is too small, a vertical orientation of a guard plate may become unstable and the guard plate may tend to "tip over" under a shear stress. If the aspect ratio of a guard plate is too large, the guard plate may tend to break apart under a bending stress since the guard plate is a piece of a hard solid material. Selection of proper aspect ratio of a guard plate can depend on the nature of intended applications.

In some examples, the size of guard plates may range from about 1 mm to about 5 mm (e.g., about 0.04 inches to about 0.2 inches), preferably from about 1 mm to about 3 mm (e.g., about 0.04 inches to about 0.1 inches) and thickness of guard plates may range from about 0.1 mm about 1 mm (e.g., about 0.004 inches to about 0.04 inches).

FIGS. 11A-11D are conceptual diagrams illustrating different shapes and patterns of guard plates from a plan view (i.e., looking down from above the surface of the fabric substrate).

FIGS. 12A-12D are conceptual diagrams illustrating various vertical profiles of example guard plates 36, 38, 40, 42, respectively, on fabric substrate 34. A guard plate can have variety of different vertical profiles including those shown in FIGS. 12A-12D. The vertical profile of a guard plate may generally refer to the shape of a guard plate when cut in half vertically. A vertical profile of a guard plate may have sharp corners at its edges, or well-rounded corners, or flat top surface or a dome-like over-all profile.

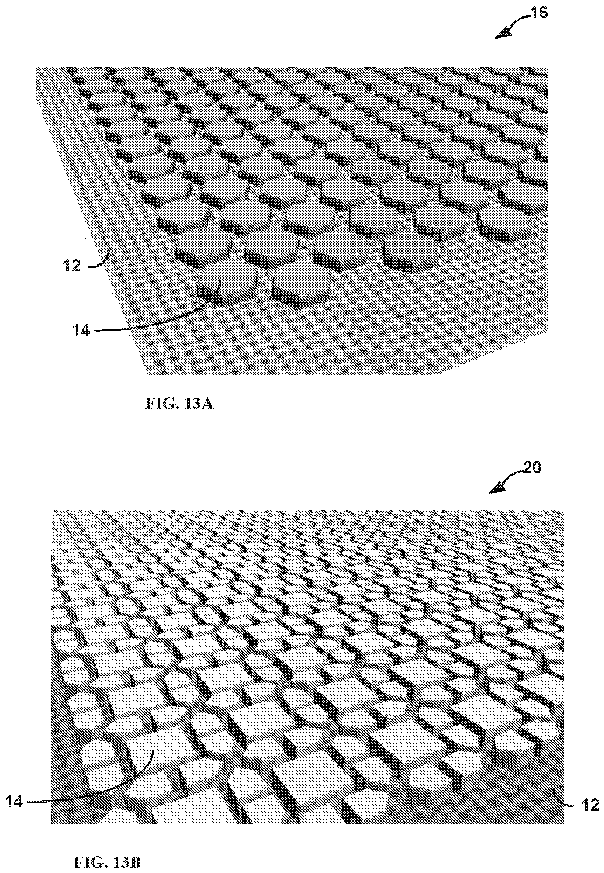

Referring to FIGS. 13A and 13B, a plurality of plates 14 (only a single plate is labelled for ease of illustration) may be affixed to the top surface of flexible fabric layer 12. Plates 14 may be affixed to the surface of flexible fabric layer 12 via any suitable means. In some examples, the uncured polymeric resin of plates 14 may be allowed to partially penetrate the surface of flexible fabric layer 12 after being deposited, e.g., printed, on layer 12, and then cured to provide mechanical attachment of plates 14 to layer 12. In other examples, cured resin plates 14 may be attached to the surface of flexible layer 12 using one or more suitable adhesives.

In some example, guard plates 14 may be arranged on substrate 12 to impart abrasive, abrasion resistance, or other properties to fabric assemblies 16, 20 not normally exhibited by fabric substrate 12 without the presence of guard plates 14. Guard plates 14 may be formed of any suitable polymeric resin composition including, but not limited to, one or more example polymeric resin compositions described in published U.S. Patent Application No. 2007/0212965, entitled "Scrub Pad with Printed Rigid Plates and Associated Methods," the entire content of which is hereby incorporated by reference. Plates 14 may be formed of UV or thermal curable polymeric compositions.

Suitable polymeric compositions for forming guard plates 14 may include epoxy resin(s). In one embodiment, plates 14 may be formed of heat-cured epoxy resin. Another example of an appropriate resin may be ultra-violet (UV) cured acrylate. Depending on the particular application, plates 14 of fabric assembly 16, 20 may have a hardness between about 70 and about 100 Shore D, such as, e.g., between about 80 and about 95 Shore D. The hardness of plates 14 may depend on a number of factors including, but not limited to, the polymeric resin composition used to form the plates and/or the process used to cure the polymeric resin composition after being deposited on the surface of flexible layer 12. In some embodiments the guard plates may comprise a thermoset epoxy. In some embodiments the guard plates may comprise inorganic filler particles. Thermally cured polymeric materials used for guard plates may be relatively hard and crack-resistant.

In some examples, the polymer resin selected for use to form guard plates may ensure a strong bond between the guard plate and the fabric substrate base material. In some examples, a suitable polymer resin for construction of guard plates is a one-part heat-curable epoxy resin formulated to (i) provide abrasion resistance, (ii) be screen printable, (iii) be resistant to fracture, (iv) be bondable to the base material, and (v) have good shape definition during printing and curing of the guard plate material. Such resins may be readily formulated to meet these criteria and are available from, for example, Fielco Industries, Inc., Huntingdon Valley, PA, 19006, which has formulated resins that may meet the characteristics set forth in this paragraph and has given them the designations: TR21 and TR84. Other examples of suitable resin formulations are available from Hexion Specialty Chemicals, Columbus, OH 43215. For example, Hexion Starting Formulation 4019 may be a suitable thermosetting heat curable epoxy base resin formulation. In some examples, abrasion resistance provided by guard plates can be increased by adding small particles (e.g., 1 to 100 micrometers) of silica, alumina, silicon carbide, titanium oxide and the like to the resin.

Additional information on embodiments of materials, including resins and fabrics, and processes that could be used to produce the guard plate geometries of this disclosure are described in U.S. Patent No. 7,018,692 filed December 31, 2001 and U.S. Patent No. 6,962,739 filed July 6, 2000 (both incorporated herein by reference). Another embodiment of this disclosure could be a second layer of polygons (guard plates) formed on top of a first layer of polygons (guard plates) as described in U.S. Patent No. 7,018,692 filed December 31, 2001. In some embodiments the fabric substrates for the designing fabric could be woven or nonwoven and made of natural, for example, cotton, or synthetic, such as polyester or nylon. The polymeric resin used for the polygons can be, as described above, thermoset epoxy resin. The entire content of each of the patents and published patent applications described in this disclose is incorporated herein by reference.

In some embodiments, the use of low-wicking resin compositions to form guard plates 14 may allow assemblies 10, 12 to maintain a relatively high degree of flexibility (e.g., substantially the same as that of substrate 12 without plates 14) despite the presence of guard plates 14. In some examples, during screen-printing or similar manufacturing processes of making polymeric resin plates on a fabric substrate, uncured polymeric materials tend to wick into the gaps between adjacent deposits. If the cured polymeric material of the plates is soft or rubbery, the wicking of the material before and/or during curing may not make the screen-printed fabric stiff, since the wicked portion of the material is still soft or rubbery after it is cured. However, if the cured material of plates is hard (for example, between about 80 to about 95 SHORE D hardness), the portion of the material wicked into gaps before and/or during curing may cause the screen-printed fabric to stiffen an undesirable amount. Using a low-wicking resin composition may allow for cured hard plates to be formed on the surface of flexible fabric layer 12 without substantially changing the flexibility of fabric layer 12 or scrub pad 10.

In some examples, a low-wicking polymeric resin composition may include one or more of an epoxy resin, phenolic resin, e.g., bakelite, polyester resin, polyurethane resin, polyimide resin, allyl resin, and the like. The polymeric resin may be a polymeric resin that irreversibly cross-links via a radiative process, such as, e.g., a thermal and/or UV process. In some examples, the polymeric resin formulation may include thermosetting resins and/or light turbo resins such as acrlyates, arylate copolymers, styrenes, and hybrids. Example epoxy resins may include Epon 828, a di-functional glycidyl ether based on bisphenol A, (obtained from Hexion Corporation, Columbus, OH), Epon 161, which is multi-functional gylcidyl epoxy of a novolac oligomer (also available from Hexion), and/or Epon 160, which is a higher molecular weight analog of Epon 161(also available from Hexion).

In some examples, the resin composition may include one or more additives. Additives may include one or more suitable curing agents, rheology modifiers, such as, e.g., one or more thixotropes, surfactants, dispersants, diluents, air release agents, fillers, colorants (dyes), glass beads, and/or the like. In some examples, a rheological modifier may impart yield stress on the resin composition, and may cause the resin composition to exhibit gel-like properties. In some examples, the resin composition may include one or more appropriate rheological modifiers from available from Hexion Corp, Columbus, OH 43215, such as, e.g., Heloxy Modifier 67. In some examples, the resin composition may include BYK 525, 555, which are bubble releasing materials from BYK USA, Wallingford, CT; BYK-9010, which is a wetting/dispersing aid also from BYK; and/or A-187, which is an epoxy functional silane available from GE Silicones. Examples colorants may include TiO₂, burnt umber, FD&C blue #2, cardinal phthalo blue, and BK 5099. In some examples, appropriate fillers may be included in the resin composition, such as, e.g., Imsil A30 available from Unimin Specialty Minerals, Inc, New Canaan, CT 06840.

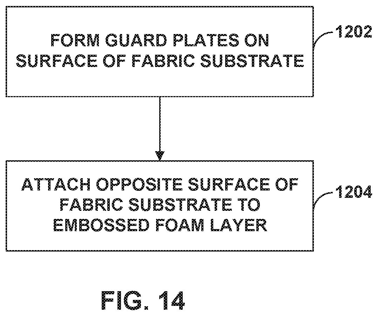

FIG. 14 is a flow diagram illustrating an example technique for forming an example embossed fabric assembly, such as, e.g., embossed fabric assembly 400, in accordance with aspects of the disclosure. For ease of description, the example with be described with regard to the configuration of assembly 400 shown in FIG. 4, although other embossed fabric assembly configurations are contemplated. As shown, plates 14 may be formed on the surface of fabric substrate 12, e.g., using the example techniques described herein (1202). The result may be a fabric assembly, such as, e.g., fabric assembly 10 shown in FIG. 1. Following the formation of plate 14 on a surface of substrate 12, the opposite surface of substrate 12 may be attached (either directly or indirectly) to the surface of embossing support layer 403 (1204). Any suitable techniques may be used for such attachment, e.g., using an adhesive layer.

The example technique used to form an example embossed fabric assembly may depend on the desired resulting composite assembly structure. For assemblies that must be rigid and require large differences (such as several inches) in thicknesses of raised and lower portions, one may use a compression molding process to produce the shape of the embossing support out of a thermosetting rigid foam. The resulting molded part may then be covered by a flexible adhesive sheet which is then covered by a flexible and stretchable sheet of a plurality of plates separated by gaps on a surface of a fabric substrate and attached to the surface of the fabric substrate. Pressure and/or vacuum and heat may then be applied to the assembly of these three objects to force the sheet containing the plurality of plates to conform to the molded embossing support layer. The adhesive chosen would be a thermoplastic that melts and bonds the components to one another. Such a process may include that described in "Handbook of Polypropylene and Polypropylene Composites," edited by Harutun Karian , CRC Press, 2003.

For assemblies that require a compressible or cushioning embossing support such as an open cell foam, one may synthesize the foam at the same time that the embossing support layer is formed. One may construct a mold consisting of a top part that is has the negative image of the embossing support that is desired and a bottom part that may be flat or have any other texture desired on the bottom side of the embossing structure. The top part and the bottom part are assembled into a clam shell mold that can be heated and/or pressurized. An open cell foam reactive mixture such as that taught in US Patent 4,877,814 A is added to the bottom portion of the mold and covered with a flexible and stretchable sheet of a plurality of plates separated by gaps on a surface of a fabric substrate and attached to the surface of the fabric substrate. One may, or may not, require an adhesive sheet between the reactive open cell foam mixture and the fabric covered with plates depending on the application. The top and bottom portion of the clam shell mold are sealed together and the open cell foam mixture is caused to react. The foam expands to fill he entire mold producing the final structure.

In another example, an embossed fabric assembly may be made as a composite that is constructed of multiple laminate layers. For example, one can envision five layers in the construction: two fabric layers, one or both of which may be fabric layers including plates such as plates 14; an open cell polyurethane (PU) or similar foam layer (or other embossed support layer material) and two nonwoven webs of thermoplastic adhesive polymer resins. The laminate layers are arranged in a fashion so that each alternating non-adhesive layer will have an adhesive layer between them, with the PU foam in the center of all layers. These laminate layers are placed in a pressing device with a pattern form and heated plate. The patterned form will contact the face side of the laminate layers. The reverse, or non-face side, will contact a flat surface of the pressing device. The laminate layers are subjected to pressure, temperature and time as specified by the desired finished composite requirements.

Examples of the present disclosure may provide for one or more advantages. For ease of description, the term "SF" will be used in the following discussion to refer to an assembly include a fabric substrate including a plurality of guards plates separated by gaps on the surface of the fabric substrate. In some examples, SF may refer to the fabric assembly referred to as SUPERFABRIC® (commercially available from Higher Dimension Materials, Oakdale, Minn.)

Example embossed fabric assemblies may exhibit two spatial scales of texture. The first fine-grained scale of texture is determined by the size, shape, and spacing of the guard plates on the flexible substrate fabric. The second scale of texture is determined by a pattern of raised and lowered portions of the embossing support layer to which the fabric substrate is attached.

The fine-grained texture is often primarily responsible for determining the cut resistance, abrasion resistance, wear resistance, durability, and stain resistance and other functionalities for which SF may exhibit. The fine-grained texture may also give the SF designer freedom of artistic expression by using the guard plates with different colors, shapes, and spacing (spacing between adjacent guard plates need not be uniform throughout the SF surface) to impart a particular image or design on the surface of the SF that is independent of the SF functional properties.

A coarse-grained structure is defined by the pattern of raised and lowered portions. The raised portions contain multiple guard plates and thereby provides a granularity larger than that defined by the pattern of the guard plates themselves. The coarse grained texture can define its own pattern on the surface of an embossed SF that gives designers additional freedom to provide aesthetically pleasing embossed SF for numerous applications such as architectural fabrics, furniture, car seats, luggage, garments, apron, elbow pads, kneepads, wheelchair cushions, hospital bed cushions and many others.

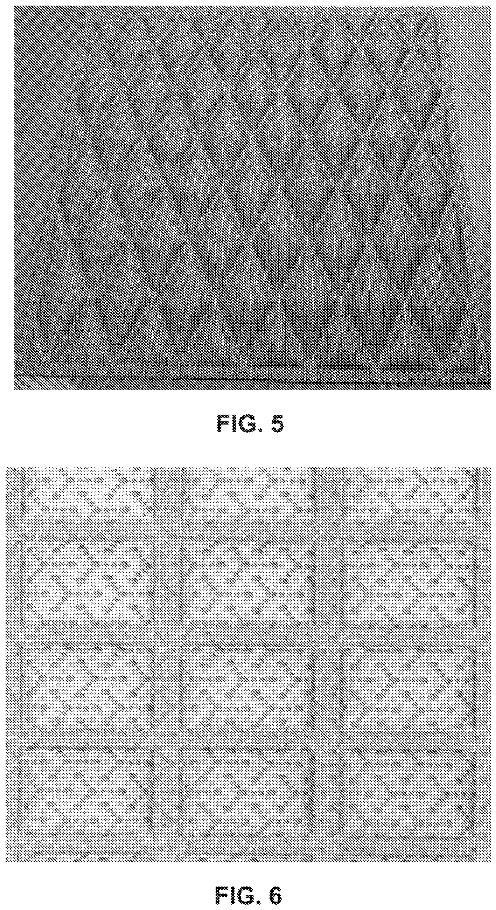

The coarse-grained structure and pattern can also add functionality independent of its design contribution. FIG. 5 illustrates an embodiment of embossed SF that has a uniform diamond shape of raised portions, FIG. 6 shows an embodiment with a uniform rectangle shape of raised portions 407 separated by lower portions 408 as described with regard to embossed fabric assembly 400 of FIG. 4. In the cases shown in FIG. 6 the embossing lines corresponding to the lower portions provide continuous straight paths for the movement of air or other fluids from one edge of the embossed SF to another edge. FIG. 7 shows an embodiment with a uniform hexagon shape of raised portions. The inventive embossed SF is not limited to these shapes of raised portions nor limited to the shown relative placements of raised portions one to another.

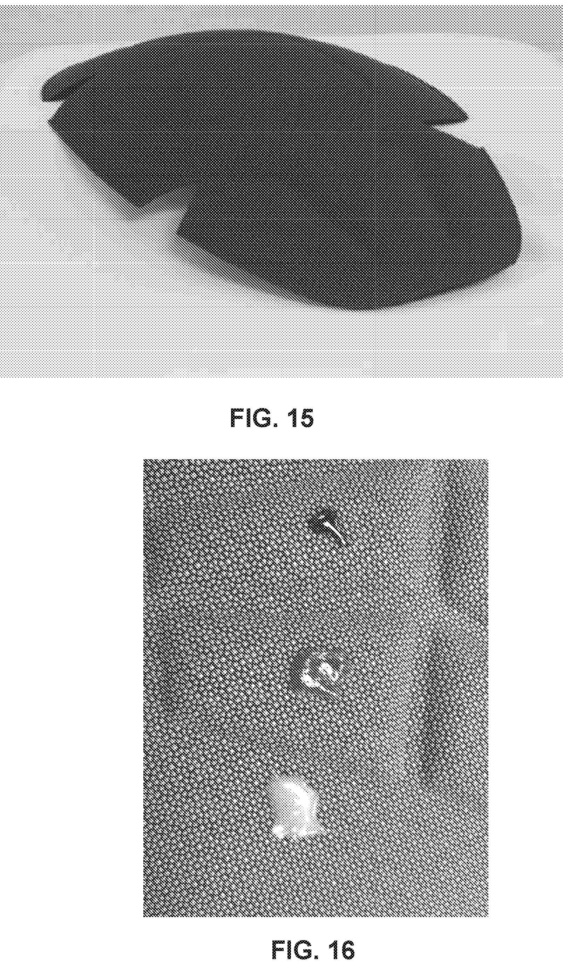

Specifically designed patterns also can allow variations in pressure stresses on any object placed upon the embossed SF. FIG. 15 is an embodiment of embossed SF that has uniform triangle raised portions but the whole assembly is bent into a shape appropriate for an elbow pad. In this case the SF exterior of the elbow pad provides the wearer protection against cuts and abrasion, the embossing cushions the wearer against impact and the specific embossing pattern distributes pressure stresses making the elbow protector more comfortable to wear. The choice of patterns for the raised portions ensures proper protection or cushioning for those parts of a body part requiring such protection, while the pattern of embossing lines allows the embossed SF shape to be bent and shaped according to the body anatomy. Similar concepts can be applied to shoulder pads, hip pads, knee pads, gloves, arm guards, and helmets.

Combining the features of continuous embossing lines for fluid movement and using patterns with designed pressure stress distribution can be especially advantageous for wheelchair cushions or hospital bed cushions. The continuous embossing lines allow the movement of air to provide cooling and comfort to the wheelchair or bed bound patient. Those lines also allow fluids an escape path so incontinent patients can get some relief from constant fluid contact with the skin. Moreover, the SF surface, even though it is air breathing, would prevent bodily fluids from leaking into the cushion padding. This is because the guard plates of SF are typically made from epoxy resins that have a very low surface energy. This means that liquids such as oil, or water will form a contact angle greater than 90 degrees on the guard plates. As long as the guard plates are reasonably close together to one another, those liquids, such as bodily fluids, cannot wet the edges of the guard plates and flow to the substrate fabric. The water based material will bead-up on the surface of SF as shown in FIG. 16. This phenomenon coupled with the hardness of the guard plates that inhibits the penetration of the guard plates by fluids makes the inventive embossed SF stain resistant and easily cleaned. For incontinent wheelchair or bed bound patients, the proper cleaning of wheelchair cushions and hospital bed cushions is an important matter. Moreover, SF may include an antimicrobial fabric so even if the surface is contaminated by bodily fluids that contain pathogens, the risk of transferring infections between patients or between patient and caregiver is reduced. Patterns with a distribution of pressure points can permit a patient to shift his or her position on the wheelchair cushion to move the points of pressure contact that will aid in the prevention of pressure sores and bedsores that are also a major problem for wheelchair patients. Bed sore prevention and antimicrobial action combine to provide a paradigm shift to wheelchair cushion and hospital bed cushion technologies and products.

Specific embossed patterns can aid in noise abatement in architectural fabrics through two mechanisms; passage of air and any sound energy the air carries with it between the guard plates, through the substrate fabric and into a choice of foam forming the embossing support layer that is an excellent sound absorber, and sound abatement enabled by the embossing structure itself.

In traditional uses of fabrics as sound absorbers, fabrics are chosen that are particularly porous thereby enhancing the fabrics' ability to convert sound energy into heat. Common porous absorbers include carpet, draperies, and open-cell foams. The porous nature of these traditional sound absorbing fabrics generally diminish their performance in stain resistance, abrasion resistance, durability, and wear limiting their use in high traffic areas such as public transportation waiting areas, public transportation vehicles. In hospital waiting areas, and patient rooms, such porous surfaces become fomite reservoirs for pathogens causing nosocomial infection transfers. The structure of embossed SF may allow for good sound absorption while maintaining excellent attributes of stain resistance, abrasion resistance, durability and wear resistance that make cleaning the surface of embossed SF much easier than cleaning the porous surfaces of materials with comparable sound abatement performance. Embossed SF using antimicrobial SF (e.g., including guard plates with antimicrobial(s) within the plate material and/or fabric substrate) may be especially helpful in preventing nosocomial infections because it provides easily cleaned surfaces that actively kill pathogens or otherwise reduce the population of such pathogens on the surface. One envisages hospital waiting room or patient furniture that limits nosocomial infections, is comfortable because of the use of appropriate cushioning foam and embossing structures, and helps provide a quiet atmosphere.

A second mechanism for sound abatement is enabled by the embossing structure itself. Specific embossed shapes can reduce the intensity of sound by scattering sound in a manner similar to the diffraction and interference of light. For example, the embossed structure could be in the shape of pyramidal diffusers that operate over a broad range of sound frequencies. One could even use embossing to produce a true quadratic residue diffuser, to enable uniform broadband scattering interference and reduce High-Q reflections. Termoformati (Via delle Rovedine, 19/21 23899 ROBBIATE ITALIA) already uses traditional embossed fabrics for noise abatement applications in consumer and institutional settings. By embossing SF with these shapes, one enables the incorporation of advanced sound abatement technology into the convenient form factor of a fabric that is also stain resistant, abrasion resistant, durable, and wear resistant and antimicrobial.

Example of embossed SF may combine the properties of such noise abatement materials with the superior performance attributes of SF. One easily envisages wall coverings, noise deadening panels, curtains, equipment cases, furniture and appliance accouterments as just a few types of products enabled by embossed SF with noise abatement properties.

The disclosure notes that, depending on the intended application, a myriad of different materials can be used to make SF guard plates, that a number of fabrics can be used as a SF substrate, and that a wide variety of guard plate shapes, guard plate sizes, guard plate patterns, and gaps may be used to control the properties of SF. Likewise, the foam or other embossing support layer material used in the sample embodiment can be chosen from a wide variety of materials.

Example applications for embossed fabric assemblies described herein, such as, e.g., embossed assembly 400 including upholstery (e.g., furniture upholstery), sound abatement panels, wheelchair cushions, wheelchair cushion covers, hospital bed cushions, knee pad, shoulder pad, elbow pad, curtains, wall coverings, gloves, footwear, hip pad, helmet, arm guard, and the like.

### EXAMPLES

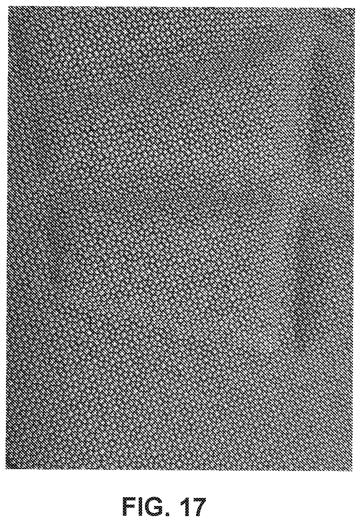

As series of tests were completed to evaluate properties of examples of embossed SF assemblies. It was generally determined that embossed SF maintains the abrasion resistance, cut resistance, durability, and stain resistance normally associated with SF without an embossing support layer.
**Example 1** - Bally Style Flex Test: Embossed SF, including domed circular epoxy guard plates 80 mil in diameter separated by gaps of 40 mils with guard plates arrayed in a hexagonal pattern one to another, laminated to flexible open cell foam forming raised portions 3 mm thick and lowered portions 1 mm thick in a square pattern, passed over 1,000,000 flex cycles at -20 °Celsius. This durability performance test evaluates a specimen's propensity to crack or otherwise fail when subjected to flexing motions. Using this test, it was observed that embossed SF surpasses fabric durability requirements for footwear, kneepad, elbow pad, shoulder pad, car seat, and upholstery products.
**Example 2** - Wyzenbeek Double Rub Abrasion Test: Embossed SF including domed circular epoxy guard plates 80 mil in diameter separated by gaps of 40 mils with guard plates arrayed in a hexagonal pattern one to another, laminated to flexible open cell foam forming raised portions 3 mm thick and lowered portions 1 mm thick in a square pattern, passed over 100,000 double rubs against denim. There was no visible sign of wear on the abraded surface. This abrasion resistance performance passed fabric abrasion resistance requirements for footwear, kneepad, car seat, and upholstery products. Typical flexible fabrics survive about 30,000 such double rubs.
**Example 3** - Cut Resistance Test: Embossed SF, including domed circular epoxy guard plates 70 mil in diameter separated by gaps of 8 mils with guard plates arrayed in a hexagonal pattern one to another, laminated to flexible open cell foam forming raised portions 5 mm thick and lowered portions 1.5 mm thick in a square pattern, survived cutting with a razor blade under 10 pounds of applied force. The test uses weights applied to a straight blade which then moves at a constant speed vertically across the material being cut until the material is cut through. The cut resistance is reported as the greatest weight the material survives without being cut through.
**Example 4** - Stain Resistance Test: FIGS. 16 and 17 show an example embossed SF including of polygonal epoxy guard plates arranged in a modified pentagon pattern one to another. The polygonal guard plates have a minimum width of 70 mils and are spaced 10 mils from one another. The embossing pattern included polygonal raised portions with a thickness of 5 mm and lowered portions with a thickness of 1.5 mm. As shown in FIG 16, the staining materials (top to bottom) were red wine, tomato ketchup, and a creamy salad dressing. The staining materials rested on the embossed fabric for 30 minutes. The surface was cleaned by a single wipe with a wet paper towel followed by a single wipe with isopropyl alcohol. As shown in FIG. 17, the embossed SF did not exhibit stains from the material on the surface and the surface was substantially free of the material after wiping.

Various examples have been described. These and other examples are within the scope of the following claims.

## Claims

1. An assembly (400) comprising:
an embossing support layer (403);
a fabric substrate (12) attached to a surface of the embossing support layer (403);
a plurality of plates (14) separated by gaps (15) on a surface of the fabric substrate (12) and attached to the surface of the fabric substrate (12),
wherein a thickness of the embossing support layer (403) varies to define a plurality of raised portions (407) separated by lower portions (408) having a thickness less than a thickness of the plurality of the raised portions (407), wherein the raised portions (407) and lower portions (408) define a pattern on a surface of the assembly (400) including the fabric substrate (12) and plurality of plates (14), and wherein each raised area of the plurality of raised portions (407) includes more than one plate of the plurality of plates (14).

2. The assembly (400) of claim 1, wherein the plurality of raised portions (407) includes a first raised portion (407A) and a second raised portion (407B), wherein a thickness of the first raised portion (407A) is different than a thickness of the second raised portion (407B).

3. The assembly (400) of claim 1, wherein the thickness of the lower portions (408) is substantially uniform around the plurality of raised portions (407).

4. The assembly (400) of claim 1, wherein the thickness of the lower portions (408) is non-uniform around the plurality of raised portions (407).

5. The assembly (400) of claim 1, wherein each of the plurality of raised portions (407) is surrounded by the lower portions (408).

6. The assembly (400) of claim 1, wherein each of the plurality of raised portions (407) defines a protrusion thickness from about 0.025 millimeters to about 500 millimeters relative to a respective adjacent lower portion (408).

7. The assembly (400) of claim 1, wherein the lower portions (408) include more than one plate of the plurality of plates (14).

8. The assembly (400) of any of claims 1-7, wherein the fabric substrate (12) is attached directly to the surface of the embossing support layer (403) via an adhesive.

9. The assembly (400) of any of claims 1-7, wherein the embossing support layer (403) comprises an open cell foam. a compressible foam, a rigid foam, a gel, or a cushioning foam.

10. The assembly (400) of any of claims 1-7, wherein the embossing support layer (403) comprises a machined solid.

11. The assembly (400) of claim 10, wherein the solid is wood, plastic or metal.

12. The assembly (400) of any of claims 1-11, further comprising another support layer attached to a surface of the embossing support layer (403) opposite the surface of the embossing support layer (403) attached to the fabric substrate (12).

13. A method comprising attaching a fabric substrate (12) to a surface of an embossing support layer (403), wherein the substrate (12) includes a plurality of plates (14) separated by gaps (15) on a surface of the fabric substrate (12) and attached to the surface of the fabric substrate (12), wherein a thickness of the embossing support layer (403) varies to define a plurality of raised portions (407) separated by lower portions (408) having a thickness less than a thickness of the plurality of the raised portions (407), wherein the raised portions (407) and lower portions (408) define a pattern on a surface of the assembly (400) including the fabric substrate (12) and plurality of plates (14), and wherein each raised area of the plurality of raised portions (407) includes more than one plate of the plurality of plates (14).

14. The method of claim 13, further comprising forming the plurality of plates (14) on the surface of the fabric substrate (12) prior to attaching the fabric substrate (12) to the surface of the embossing support layer (403).

15. The method of claim 13, wherein attaching the fabric substrate (12) to the surface of the embossing support layer (403) comprising placing the fabric substrate (12) in a mold forming a negative relief of the pattern of the surface of the embossing support layer (403) and filling the mold with a chemical composition that forms the embossing support layer (403) when activated.

## Patentansprüche

1. Einheit (400), umfassend:
eine Prägeträgerschicht (403);
ein Stoffsubstrat (12), das an einer Oberfläche der Prägeträgerschicht (403) angebracht ist;
eine Mehrzahl von Platten (14), die durch Abstände (15) auf einer Oberfläche des Stoffsubstrats (12) getrennt und an der Oberfläche des Stoffsubstrats (12) angebracht sind;
wobei eine Dicke der Prägeträgerschicht (403) variiert, um eine Mehrzahl erhöhter Teile (407) zu definieren, die durch flachere Teile (408) mit einer geringeren Dicke als die Dicke der Mehrzahl erhöhter Teile (407) voneinander getrennt sind, wobei die erhöhten Teile (407) und die flacheren Teile (408) auf einer Oberfläche der Einheit (400), die das Stoffsubstrat (12) und die Mehrzahl von Platten (14) aufweist, ein Muster definieren, und wobei jeder erhöhte Bereich der Mehrzahl erhöhter Teile (407) mehr als eine Platte der Mehrzahl von Platten (14) aufweist.

2. Einheit (400) nach Anspruch 1, wobei die Mehrzahl erhöhter Teile (407) einen ersten erhöhten Teil (407A) und einen zweiten erhöhten Teil (407B) aufweist, wobei sich eine Dicke des ersten erhöhten Teils (407A) von einer Dicke des zweiten erhöhten Teils (407B) unterscheidet.

3. Einheit (400) nach Anspruch 1, wobei die Dicke der flacheren Teile (408) um die Mehrzahl der erhöhten Teile (407) im Wesentlichen einheitlich ist.

4. Einheit (400) nach Anspruch 1, wobei die Dicke der flacheren Teile (408) um die Mehrzahl der erhöhten Teile (407) uneinheitlich ist.

5. Einheit (400) nach Anspruch 1, wobei jeder Teil der Mehrzahl der erhöhten Teile (407) von den flacheren Teilen (408) umgeben ist.

6. Einheit (400) nach Anspruch 1, wobei jeder Teil der Mehrzahl der erhöhten Teile (407) eine Vorstandsdicke von etwa 0,025 Millimetern bis etwa 500 Millimetern im Verhältnis zu einem entsprechenden benachbarten flacheren Teil (408) definiert.

7. Einheit (400) nach Anspruch 1, wobei die flacheren Teile (408) mehr als eine Platte der Mehrzahl von Platten (14) aufweisen.

8. Einheit (400) nach einem der Ansprüche 1 bis 7, wobei das Stoffsubstrat (12) durch einen Klebstoff direkt an der Oberfläche der Prägeträgerschicht (403) angebracht ist.

9. Einheit (400) nach einem der Ansprüche 1 bis 7, wobei die Prägeträgerschicht (403) einen offenporigen Schaumstoff, einen elastischen Schaumstoff, einen steifen Schaumstoff, ein Gel oder einen polsternden Schaumstoff umfasst.

10. Einheit (400) nach einem der Ansprüche 1 bis 7, wobei die Prägeträgerschicht (403) einen bearbeiteten Feststoff umfasst.

11. Einheit (400) nach Anspruch 10, wobei der Feststoff Holz, Kunststoff oder Metall ist.

12. Einheit (400) nach einem der Ansprüche 1 bis 11, ferner umfassend eine Trägerschicht, die an einer Oberfläche der Prägeträgerschicht (403) entgegengesetzt zu der Oberfläche der Prägeträgerschicht (403) angebracht ist, die an dem Stoffsubstrat (12) angebracht ist.

13. Verfahren, welches das Anbringen eines Stoffsubstrats (12) an einer Oberfläche einer Prägeträgerschicht (403) umfasst, wobei das Substrat (12) eine Mehrzahl von Platten (14) aufweist, die durch Abstände (15) auf einer Oberfläche des Stoffsubstrats (12) getrennt und an der Oberfläche des Stoffsubstrats (12) angebracht sind; wobei eine Dicke der Prägeträgerschicht (403) variiert, um eine Mehrzahl erhöhter Teile (407) zu definieren, die durch flachere Teile (408) mit einer geringeren Dicke als die Dicke der Mehrzahl erhöhter Teile (407) voneinander getrennt sind, wobei die erhöhten Teile (407) und die flacheren Teile (408) auf einer Oberfläche der Einheit (400), die das Stoffsubstrat (12) und die Mehrzahl von Platten (14) aufweist, ein Muster definieren, und wobei jeder erhöhte Bereich der Mehrzahl erhöhter Teile (407) mehr als eine Platte der Mehrzahl von Platten (14) aufweist.

14. Verfahren nach Anspruch 13, ferner umfassend das Ausbilden der Mehrzahl von Platten (14) auf der Oberfläche des Stoffsubstrats (12) vor dem Anbringen des Stoffsubstrats (12) an der Oberfläche der Prägeträgerschicht (403).

15. Verfahren nach Anspruch 13, wobei das Anbringen des Stoffsubstrats (12) an der Oberfläche der Prägeträgerschicht (403) das Platzieren des Stoffsubstrats (12) in einer Form umfasst, die eine Negativform des Musters auf der Oberfläche der Prägeträgerschicht (403) bildet, und das Füllen der Form mit einer chemischen Zusammensetzung, welche die Prägeträgerschicht (403) bildet, wenn sie aktiviert wird.

## Revendications

1. Ensemble (400), comprenant :
une couche de support de gaufrage (403) ;
un substrat de tissu (12) fixé à une surface de la couche de support de gaufrage (403) ;
une pluralité de plaques (14) séparées par des espaces (15) sur une surface du substrat de tissu (12) et fixées à la surface du substrat de tissu (12),
une épaisseur de la couche de support de gaufrage (403) variant pour définir une pluralité de parties en relief (407) séparées par des parties inférieures (408) ayant une épaisseur inférieure à une épaisseur de la pluralité des parties en relief (407), les parties en relief (407) et les parties inférieures (408) définissant un motif sur une surface de l'ensemble (400) comprenant le substrat de tissu (12) et la pluralité de plaques (14), et chaque partie en relief de la pluralité de parties en relief (407) comprenant plus d'une plaque de la pluralité de plaques (14).

2. Ensemble (400) selon la revendication 1, la pluralité de parties en relief (407) comprenant une première partie en relief (407A) et une seconde partie en relief (407B), une épaisseur de la première partie en relief (407A) étant différente d'une épaisseur de la seconde partie en relief (407B).

3. Ensemble (400) selon la revendication 1, l'épaisseur des parties inférieures (408) étant sensiblement uniforme autour de la pluralité de parties en relief (407).

4. Ensemble (400) selon la revendication 1, l'épaisseur des parties inférieures (408) étant sensiblement non uniforme autour de la pluralité de parties en relief (407).

5. Ensemble (400) selon la revendication 1, chacune de la pluralité de parties en relief (407) étant entourée par les parties inférieures (408).

6. Ensemble (400) selon la revendication 1, chacune de la pluralité de parties en relief (407) définissant une épaisseur de saillie comprise entre environ 0,025 mm et environ 500 mm par rapport à une partie inférieure (408) adjacente respective.

7. Ensemble (400) selon la revendication 1, les parties inférieures (408) comprenant plus d'une plaque de la pluralité de plaques (14).

8. Ensemble (400) selon l'une quelconque des revendications 1 à 7, le substrat de tissu (12) étant fixé directement à la surface de la couche de support de gaufrage (403) par l'intermédiaire d'un adhésif.

9. Ensemble (400) selon l'une quelconque des revendications 1 à 7, la couche de support de gaufrage (403) comprenant une mousse à cellules ouvertes, une mousse compressible, une mousse rigide, un gel ou une mousse d'amortissement.

10. Ensemble (400) selon l'une quelconque des revendications 1 à 7, la couche de support de gaufrage (403) comprenant un solide usiné.

11. Ensemble (400) selon la revendication 10, le solide étant du bois, du plastique ou du métal.

12. Ensemble (400) selon l'une quelconque des revendications 1 à 11, comprenant en outre une autre couche de support fixée à une surface de la couche de support de gaufrage (403) opposée à la surface de la couche de support de gaufrage (403) fixée au substrat de textile (12).

13. Procédé comprenant la fixation d'un substrat de tissu (12) à une surface de la couche de support de gaufrage (403), le substrat (12) comprenant une pluralité de plaques (14) séparées par des espaces (15) sur une surface du substrat de tissu (12) et fixées à la surface du substrat de tissu (12), une épaisseur de la couche de support de gaufrage (403) variant pour définir une pluralité de parties en relief (407) séparées par des parties inférieures (408) ayant une épaisseur inférieure à une épaisseur de la pluralité des parties en relief (407), les parties en relief (407) et les parties inférieures (408) définissant un motif sur une surface de l'ensemble (400) comprenant le substrat de tissu (12) et la pluralité de plaques (14), et chaque partie en relief de la pluralité des parties en relief (407) comprenant plus d'une plaque de la pluralité de plaques (14).

14. Procédé selon la revendication 13, comprenant en outre la formation de la pluralité de plaques (14) sur la surface du substrat de tissu (12) avant de fixer le substrat de tissu (12) à la surface de la couche de support de gaufrage (403).

15. Procédé selon la revendication 13, la fixation du substrat de tissu (12) à la surface de la couche de support de gaufrage (403) comprenant le placement du substrat de tissu (12) dans un moule formant un relief négatif du motif de la surface de la couche de support de gaufrage (403) et le remplissage du moule avec une composition chimique qui forme la couche de support de gaufrage (403) lorsqu'elle est activée.
